# EUROPEAN PATENT SPECIFICATION

(11) **EP 1 628 442 B1**
(45) Date of publication and mention of the grant of the patent: **30.09.2009**
(21) Application number: 04019369.0
(22) Date of filing: 16.08.2004
(51) Int. Cl.: H04W 52/02

(54) **Method of managing radio resources in a radio access network**
Verfahren zur Verwaltung von Funkkapazität in einem Funkzugriffsnetzwerk
Procédé pour la gestion des ressources radio dans un réseau d'accès radio

(43) Date of publication of application: 22.02.2006
(73) Proprietor: Research in Motion Limited, Waterloo, ON N2L 3W8 (CA)
(72) Inventor: Farnsworth, Andrew John, Bromsgrove, Worcestershire B60 1HW (GB); de Jong, Gjalt Gerrit, 3001 Leuven (BE)
(74) Representative: Bewley, Ewan Stuart

(56) References cited:
- EP-A- 1 337 125
- EP-A- 1 377 096
- EP-A- 1 383 348
- US-A- 5 946 620
- US-A1- 2001 018 342
- US-A1- 2002 049 075
- US-A1- 2002 068 618
- US-A1- 2003 013 494
- US-A1- 2004 017 792
- US-A1- 2004 224 688
- US-B1- 6 463 044
- ANDY FARNSWORTH: "UL transmission during Cell Update" 3GPP_TSG_RAN_WG2 ARCHIVES - JANUARY 2003, [Online] 28 January 2003 (2003-01-28), pages 1-2, XP002333085 INTERNET Retrieved from the Internet: URL:http://list.3gpp.org/scripts/wa.exe?A2 =ind0301&L=3gpp_ran_wg2&T=0&O=A&P=11027> [retrieved on 2005-06-22]
- ANON: "UMTS Radio Resource Control protocol specification" ETSI TS 123 331 V3.15.0, June 2003 (2003-06), pages 1-27, XP002278705 INTERNET
- ANDY FARNSWORTH: "Re: questions,need help" 3GPP_TSG_RAN_WG2 ARCHIVES - DECEMBER 2002, 19 December 2002 (2002-12-19), pages 1-2, XP002333086 INTERNET

## Description

The present invention generally concerns a next generation mobile communications system and, in particular, to a method for maintaining transparent mode radio bearers in a Radio Access Network (RAN) of such a mobile communications system.

In a Radio Resource Control (RRC) arrangement of a User Equipment (UE) and a Radio Access Network (RAN) of a next generation mobile communications system, upon termination of a UE call, the RRC of the RAN sends a radio bearer (RB) release message to the RRC of the UE to discard radio access bearer (RAB) information for one or more transparent mode (TM) RBs used by the UE to transmit and receive user information. The release message may also instruct the UE to transition to one of a number of lower activity connection states. In some of the lower activity connection states, the UE is only able to send and receive information at the RRC level. In the event that the UE is to send or receive user information again, then it is necessary to re-establish RAB information for one or more new TM RBs for the UE. This requires an exchange of RAB establishment messages to be communicated between the UE and RAN. These messages are wasteful of air interface resources, can lead to interference with other UEs, can create an un-necessary delay in returning the UE to a suitable configuration for sending/receiving user information and can increase the possibility of signalling errors between the UE and the RAN.

US5946620 discloses a radio communication system having a subscriber unit that operates to reduce registration requirements, particularly for power up operations. The subscriber unit saves communication environment information before powering down, and restores the stored environment information upon a subsequent power up, if the stored environment information is deemed current. The subscriber unit may complete a full power up registration process if the stored environment information is determined to be outdated.

EP1383348 discloses a mobile unit or user equipment (UE) including a radio resources controller (RRC) and a plurality of unique states defining the connectivity between the UE and a base station. Once a RRC indicates that it is "Out of Service", a series of timers are started to limit the duration of attempts by the RRC to re-enter an "In Service" condition before the RRC releases allocated resources and moves to an Idle Mode. In certain circumstances, it is necessary to stop one or more of these timers to prevent inadvertently severing the connection.

US6463044 discloses a method for controlling the traffic load of a base station in a mobile communication system. The base station dynamically manages the state transitions of the mobile stations according to the amount of traffic load carried by the base station.

EP1414200 discloses mobile communication system comprising a base station and a mobile station. A radio channel is set between the base station and the mobile station and a packet is transmitted from the base station to the mobile station by using the radio channel. The base station sets the radio channel to the mobile station. A base station state updating section generates transmission/reception state update information that indicates update of a packet receivable state in the mobile station and notifies the mobile station of the transmission/reception state update information. A base station information storage section continuously holds dedicated physical channel setting information in the radio channel in a suspend state. The mobile station is similarly arranged to continuously hold the dedicated physical channel setting information in the radio channel in the suspend state.

US2002/068618 discloses a method that provides a mobile communication device with the ability to quickly re-establish a communication session with another after the communication device is awakened from a sleep or idle mode. The mobile communication device is provided with a first power system for powering a central operating system and a second power system for powering a communication system. A mobile communication device establishes a communication session with another communication device by establishing a connection and establishing a communication session. During an idle period, the communication session in a stack will be stored in memory. The first power system and the central operating system will then enter a low power or sleep mode, while second power system and the communication system can maintain a communication connection with the other device. Upon re-establishing communications, the mobile communication device will wake up the first power supply and the central operating system. The central operating system will then copy the previous communication session from the memory into the stack and re-establish the communication session with the other device.

US2002/049075 discloses a multi-band portable radio terminal equipment, where prior to powering off a mobile piece, the setting parameters are stored in memory. The same settings as before can be obtained when turning on the device the next time.

US2003/013494 discloses a mobile radio terminal equipment where prior to powering off a mobile piece, the setting parameters are stored in memory. After wake-up, the settings are retrieved from memory.

In one embodiment the invention may mitigate and/or obviate problems associated with the known arrangement of a RAN RRC issuing a RB release message to a UE RRC on termination of a UE call.

In one embodiment the invention may provide a more efficient method of reconfiguring a released UE call.

In a further embodiment the invention may provide a reduced message set between the RAN RRC and the UE RRC on "re-connection" of a UE call.

In a first main aspect, the present invention provides a method of managing a connection state of a user equipment `UE' in a radio access network 'RAN' comprising a Universal Mobile Communications System Terrestrial Radio Access Network 'UTRAN', wherein it comprises the step of: communicating a message from a radio resource controller 'RRC' of the RAN to the UE, said message being arranged to cause the UE to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode 'TM' radio bearer `RB' information associated with said first connection state for a period of time after the UE has transitioned to the second connection state; wherein said message is initiated in response to detection of a period of inactivity on the dedicated channel assigned to the first connection state.

In a second main aspect, the present invention provides a radio network controller 'RNC' having a radio resources controller 'RRC' for managing a connection state of a user equipment 'UE' operating within a radio access network 'RAN' comprising a Universal Mobile Communications System Terrestrial Radio Access Network `UTRAN', said UE communicating with the RNC over an air interface, wherein the RRC is arranged to communicate a message to the UE, said message being arranged to cause the UE to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode `TM' radio bearer `RB' information associated with said first connection state for a period of time after the UE has transitioned to the second connection state; wherein said message is initiated in response to detection of a period of inactivity on the dedicated channel assigned to the first connection state.

In a third main aspect, the present invention provides a Universal Mobile Communications System Terrestrial Radio Access Network 'UTRAN' comprising a radio network controller (RNC) in accordance with the second main aspect of the invention.

In a fourth main aspect, the present invention provides a user equipment operable within a radio access network 'RAN' comprising a Universal Mobile Communications System Terrestrial Radio Access Network 'UTRAN', wherein said UE is arranged to process a transition message received from a radio resources controller 'RRC' of said RAN, wherein, on processing said message, said UE is caused to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode 'TM' radio bearer 'RB' information associated with said first connection state for a period of time after the UE has transitioned to the second connection state; wherein said message is initiated in response to detection of a period of inactivity on the dedicated channel assigned to the first connection state.

In a fifth main aspect, the present invention provides a machine,readable medium carrying computer program code for a radio network controller'RNC' of a radio access network 'RAN' comprising a Universal Mobile Communications System Terrestrial Radio Access Network `UTRAN', said computer program code being executable in a processor of the RNC for implementing a method in accordance with the first main aspect of the invention.

Other features of the present invention will be apparent from the appended claims.

### Brief description of the drawings

A description of the present invention will follow with reference to the accompanying drawings, of which:
Figure 1 is a block schematic diagram of a UTRAN system architecture;
Figure 2 is a block schematic diagram illustrating a radio interface protocol architecture for the air interface between the UE and the UTRAN;
Figure 3 illustrates RRC signalling relating to the establishment of a transparent mode radio bearer for the UE;
Figure 4 illustrates RRC signalling relating to the re-establishment of a transparent mode radio bearer for the UE following transition of the UE to a lower activity connection state from a high activity connection state;
Figure 5 illustrates RRC signalling relating to the establishment of a transparent mode radio bearer for the UE in accordance with the present invention;
Figure 6 illustrates RRC signalling relating to the re-establishment of a transparent mode radio bearer for the UE following transition of the UE to a lower activity connection state from a high activity connection state in accordance with the present invention;
Figure 7 is a schematic block diagram illustrating the functional structure of a RNC for implementing the present invention; and
Figure 8 is a schematic block diagram of the functional structure of a UE for implementing the present invention.

### Detailed description of a preferred embodiment.

The foregoing and further features of the present invention will be more readily understood from a description of a preferred embodiment, by way of example thereof, with reference to the accompanying figures.

The so-called third generation mobile communications system is presently evolving. This is a next generation global mobile communications system that is generally based on the core network technology of the existing Global System for Mobile Communications (GSM). Various telecommunications standards bodies and telecommunications equipment vendors from around the world have agreed to collaborate on what is known as the Third Generation Partnership Project (3GPP). The 3GPP encompasses a number of research fields including the Universal Mobile Telecommunications System (UMTS) Terrestrial Radio Access Network (UTRAN). UMTS is the European form of the third generation mobile communications system.

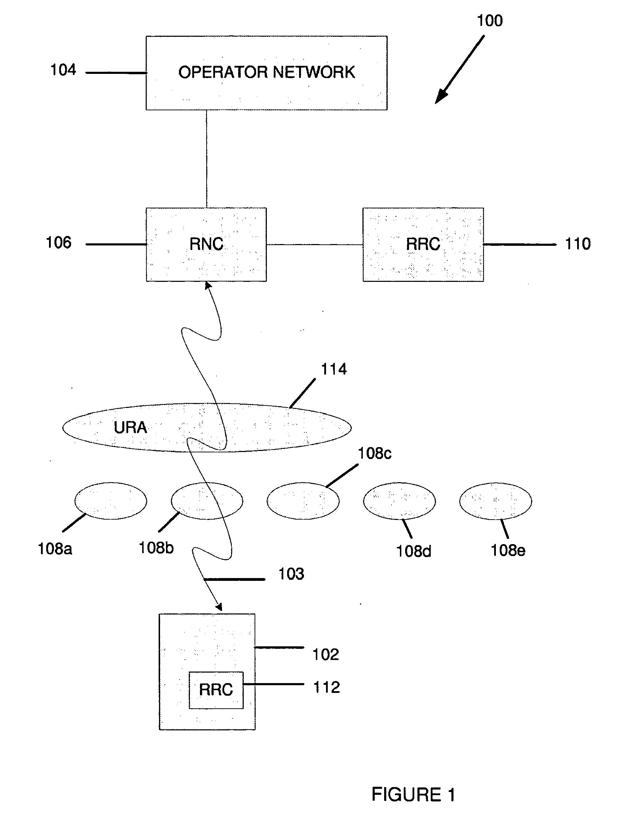

The following description of the UTRAN with reference to figures 1 to 4 is provided as background to the present invention and by way of explanation thereof and comparison therewith.

Referring to figure 1, a UTRAN 100 connects a User Equipment (UE) 102 over a wireless interface 103 to an operator (core) network 104 which provides services to subscribers (users of UEs). The UE 102 may comprise a mobile wireless device as will be familiar to a skilled artisan. The UE 102 is connected to the operator network 104 through a Radio Network Controller (RNC) 106 which controls a plurality of cells 108a-e within which the UE 102 can operate as it moves within respective geographical areas of said cells 108a-e. The UTRAN 100 comprises a number of RNCs 106 although only one is shown in the figure for reasons of convenience.

Each of the RNC 106 and the UE 102 has a respective Radio Resource Controller 110, 112 associated therewith. The RNC RRC 110 provides various functions including establishment, maintenance and release of radio access resources for UEs 102 within the cells controlled by the RNC RRC 110 and may include an information broadcast function for all such UEs 102. The UE RRC 112 co-operates with the RNC RRC 110 to establish, maintain and release radio access resources allocated to its UE 102.

Each cell 108a-e comprises a respective geographical area in which radio coverage is provided by a respective base station or Node B (not shown) located within said cell. The base stations or Node B's are controlled by the RNC 110.

In the UTRAN 100, cells 108a-e can be grouped to provide what might be considered a higher level cell or geographical coverage. A Universal RadioUTRAN Registration Area (URA) may comprise one or more cells 108a-e controlled by an RNC 110 or a number of cells from different RNCs, although the URA 114 as illustrated in figure 1 is shown as comprising cells 108a-c for reasons of convenience. There can be many URAs although only one is illustrated.

When the UE 102 is powered on, it initially enters an idle mode. In this mode, the UE 102 is not yet connected to the UTRAN 100. When the RNC RRC 110 and UE RRC 112 co-operate to establish a connection (one or a set of radio bearers) for the UE 102, the UE 102 assumes a connected mode and can occupy one of four connection states within that mode. The four connection states comprise a CELL_DCH state, a CELL_FACH state, a URA_PCH state and a CELL_PCH state as specified in the UMTS specification.

On a dedicated channel connection for a voice call, for example, the UE 102 will be in a CELL_DCH state. In this state, a dedicated physical channel is defined and assigned to the UE 102 and one or more transparent radio bearers may also be defined and assigned to the UE 102. The CELL_DCH state can be considered as a call connection state and is a higher level activity connection state when compared to the other connection states. This connection state can also be considered as the most ready from a user information transmission/reception status but consumes more power than other connection states.

The CELL_FACH state has no dedicated physical channel assigned to the UE 102. In this connection state, the UE 102 listens continuously to a common channel (the FACH) in the downlink belonging to the cell 108b it is operating in and, in the uplink direction, uses a random access channel (RACH). This state uses less power than the CELL_DCH state but is considered less ready for user information transmission/reception than the CELL_DCH state. This connection state comprises one of a number of lower activity connection states within the context of the present invention.

The CELL_PCH state uses even less power than the CELL_FACH state but is considered less ready for user information transmission/reception compared to the CELL_FACH state. In this connection state, the UE 102 monitors a paging channel (PCH) of its cell 108b. On the PCH, the UE 102 uses discontinuous reception to save power. This state also does not have a dedicated channel assigned to the UE 102. This can also be considered as a low activity connection state.

The URA_PCH state is similar to the CELL_PCH state and is also one of the number of low activity connection states.

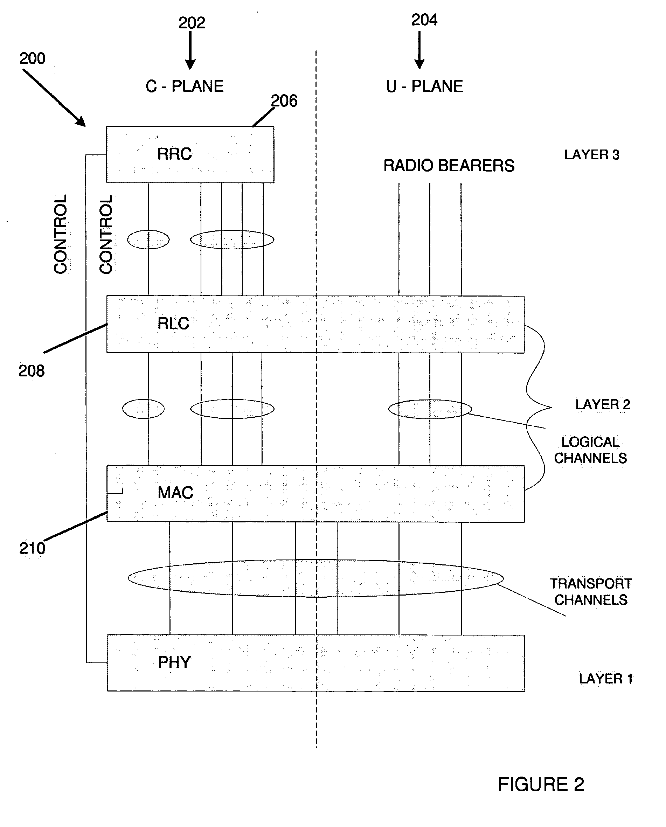

Referring now to figure 2, shown is a 3GPP radio interface protocol architecture 200 for the air interface 103 between the UE 102 and the RNC 106. The protocol architecture 200 comprises a control plane (C-plane) 202 and a user plane (U-plane) 204. The C-plane 202 is used for signalling and the U-plane 204 for transmission of user information. The C-plane 202 includes a RRC Layer 206 at Layer 3 of the protocol architecture and a Radio Link Control (RLC) Layer 208 and a Medium Access Control (MAC) Layer 210 at Layer 2 thereof. The U-plane 204 shares the RLC Layer 208 and the MAC Layer 210 at Layer 2.

The MAC Layer 210 provides the RLC Layer 208 with logical channels. Logical control channels are provided when information for the C-plane 202 is to be transported and traffic channels are provided when user information on the U-plane 204 is to be transported. The MAC Layer 210 also provides a radio resource reconfiguration service when the RNC RRC 110 requests a radio resource reconfiguration or a MAC parameter change.

The RLC Layer 208 provides radio access establishment and release services. The RNC RRC 110 controls the Layer 3 signal processing between the RNC 104 and the UE 102 to establish, maintain and release radio access resources (radio bearers) between the UE 102 and UTRAN 100.

The air interface protocol layers as aforedescribed provide many other services and perform many other functions as will be familiar to a skilled artisan and as described in the UMTS specification relating to the air interface architecture protocol stack.

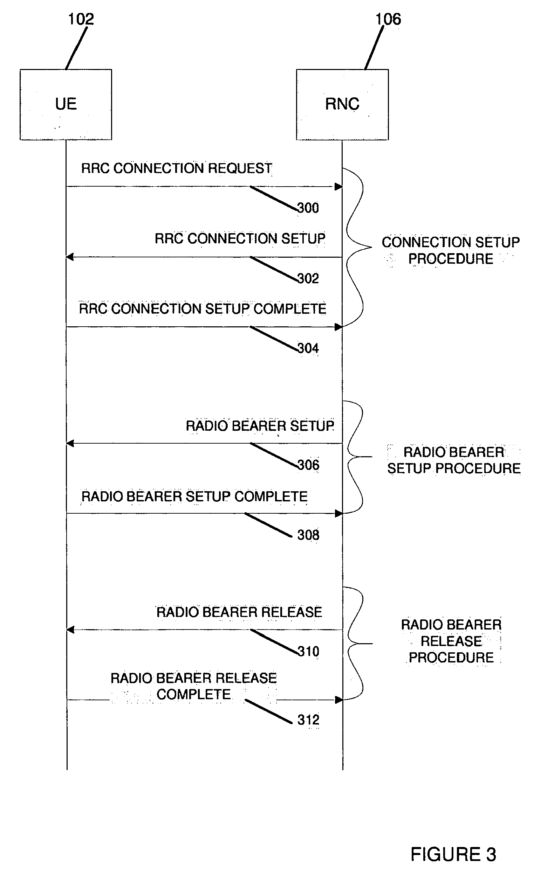

Referring now to figure 3, illustrated is the RRC signalling relating to the establishment of one or more TM RBs for the UE 102. The connection establishment procedure is initiated by the UE RRC 112, which sends a RRC connection request message 300 to the RNC 106. The RNC 106 responds with a RRC connection setup message 302 which provides information on various parameters of the connection to be established. The UE 102 completes the connection setup procedure by forwarding a RRC connection setup complete message 304 to the RNC 106.

The connection setup procedure is followed by a transparent mode radio bearer setup procedure initiated by the RNC 106. This comprises the RNC 106 under the control of its RRC 110 forwarding to the UE 102 a radio bearer setup message 306 containing information about parameters of the one or more TM RBs to be established for a UE call. The UE 102 completes the bearer setup procedure by responding to the RNC 106 with a radio bearer setup complete message 308.

On termination of a UE call, the one or more TM RBs are released. This procedure comprises the RNC 106 sending a radio bearer release message 310 to the UE 102. The UE 102 responds with a radio bearer release complete message 312. During the period of the call connection and up to the time of the bearer release procedure 310, 312, the UE 102 occupies the high activity call connection state CELL_DCH having a dedicated channel assigned to it. Upon processing the bearer release message 310, the UE RRC 112 discards RAB information relating to the call and releases the dedicated channel used for the call. This procedure is consistent with the current UMTS specification which prevents existing TM RBs from being re-used after CELL_PCH or URA_PCH states have been entered. The radio bearer release message 310 instructs the UE 102 to transition to the lower activity connection state.

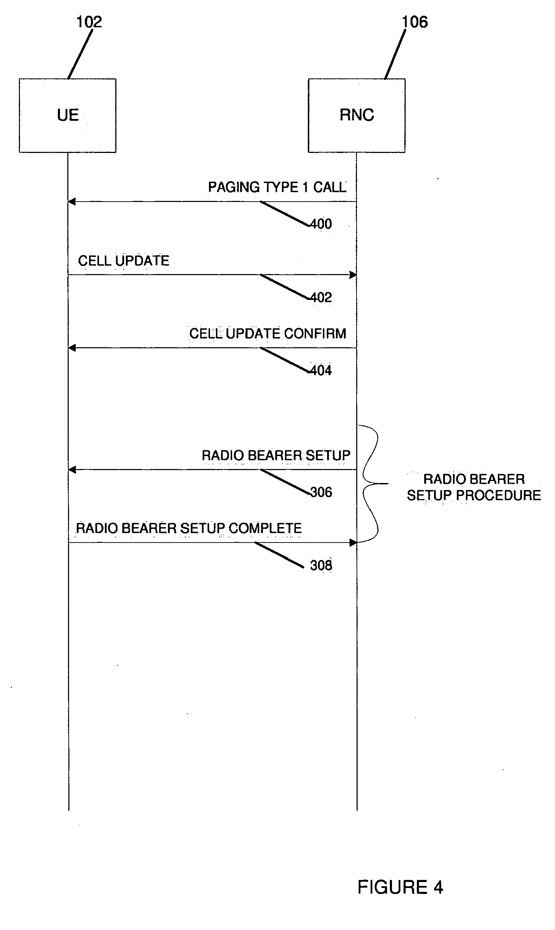

After the UE 102 has been transitioned to a lower activity connection state such as the CELL_PCH state, to return the UE 102 to a configuration where a voice call or a streaming data call can be implemented requires the RRC message exchange between the UE 102 and the RNC 106 as illustrated in figure 4 for a mobile terminating or network initiated call. This is because the UMTS specification specifies that the UE 102 is to be returned to the idle mode when trying to leave either of the CELL_PCH or URA_PCH states with TM RBs. The message exchange comprises the RNC 106 initiating a paging type 1 message 400 to the UE 102 which prompts the UE 102 to send a cell update message 402 to the RNC 106. The RNC 106 returns with a cell update confirm message 404 before initiating the radio bearer setup procedure (messages 306, 308) as described with respect to figure 3.

The message exchange for a mobile originating call is similar and it comprises the UE 102 sending a cell update message 402 to the RNC 106. The RNC 106 returns with a cell update confirm message 404 before initiating the radio bearer setup procedure (messages 306, 308) as described with respect to figure 3.

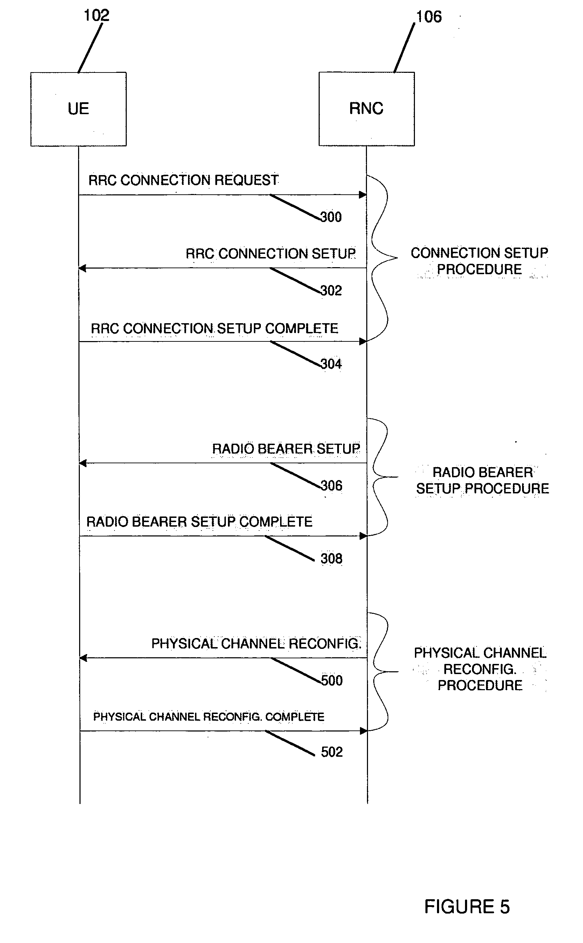

A preferred embodiment of the present invention by way of example thereof will now be described with reference to figures 5 to 8 of the drawings. It will be appreciated, however, that the present invention can be implemented in the UTRAN 100 without modification of the physical structure of said network and thus the foregoing description of the UTRAN 100 with respect to figures 1 to 4 is applicable to the preferred embodiment save where the following description describes alternative method and/or implementations.

A call connection establishment procedure in accordance with the present invention differs from that as described with reference to figure 3 in that it modifies or replaces the radio bearer release message 306 to cause the UE 102 not to discard TM RAB information when the UE 102 is transitioned from a high activity connection state having a dedicated channel assigned to it, namely the CELL_DCH state, to a lower activity connection state not having a dedicated channel assigned to it such as either of the CELL_PCH or URA_PCH states, for example.

As illustrated in figure 5, the modified/replaced bearer release message may comprise a physical channel reconfiguration message 500. The physical channel reconfiguration message 500 is forwarded by the RNC 106 to the UE 102 and arranged to cause the UE 102 not to delete TM RB information associated with the high activity connection state whilst releasing the physical channel assigned to carry the TM RBs for said high activity connection state. The physical channel reconfiguration message 500 instructs the UE 102 to discard physical channel information from radio access bearer (RAB) information already stored by the UE 102. In effect, the RNC 106 moves the connection state of the UE 102 from its high activity connection state, i.e. a connection state in which the UE 102 has a dedicated channel assigned to it, to one of a number of lower activity connection states not involving a dedicated channel without releasing the TM RBs associated with said high activity connection state without explicitly instructing the UE 102 to maintain TM RB information but equally without causing or instructing said UE 102 to discard said information. One advantage of this arrangement is that the physical channel reconfiguration message 500 is smaller in size than the UMTS specified radio bearer release message 306 and so may use less air interface 103 resources, may be transmitted with improved reliability, or may cause less interference. The UE 102 responds to receipt of the physical channel reconfiguration message 500 with a physical channel reconfiguration complete message 502.

In an alternative arrangement, the message 500 explicitly instructs the UE 102 to store existing TM RB information associated with the first connection state or to maintain such information in its memory when transitioning from a high activity connection state to a lower activity connection state.

In another alternative arrangement, the message 500 may comprise a radio bearer reconfiguration message or a transport channel reconfiguration message instructing the UE 102 to replace its existing TM RBs with new TM RBs whilst releasing the dedicated physical channel assigned to it as it transitions to a lower activity connection state.

Transmission of the message 500 to the UE 102 may be initiated by the RNC 106 detecting termination of a voice call by the UE 102 or detecting a period of inactivity on the dedicated channel assigned to the UE 102. A period of inactivity may comprise a silent period detected in a data streaming connection, for example.

After sending the physical channel reconfiguration message 500, the UTRAN 100 may keep the UE 102 in a low activity connection state for a period of time before a radio bearer release procedure 310, 312 is initiated. The radio bearer release procedure may be initiated by the RNC RRC 110 after a predetermined period of time or in response to events such as congestion in the cell 108b the UE 102 is operating in or other network events.

An advantage of this arrangement is that, where the UE 102 has had its connection state transitioned by the RNC 104 from a high activity state associated with a data streaming connection to a lower activity state in response to a silent period detected in the data streaming connection, the retention by the UE 102 of the TM RB information for a period of time allows the high activity data connection to be readily re-established once data begins to flow again without the need for a radio bearer setup procedure to be implemented. Consequently, the period of time may be chosen as any suitable period and may be one that is statistically just longer than a longest silent period detected in a data stream that has been communicated over the TM RBs during a sampling period.

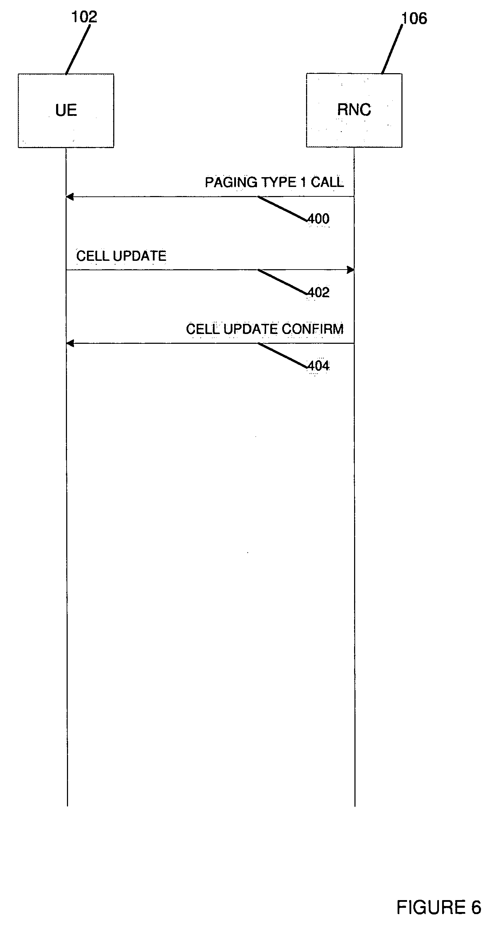

In order to re-establish the high activity connection (dedicated channel) state for the UE 102 in accordance with the preferred embodiment of the present invention, it is only necessary for the UE 102 to send to the RNC 106 a cell update message 402 as illustrated in figure 6. The sending of this cell update message 402 may be prompted by receipt at the UE 102 of a paging type 1 message 400 from the RNC 106 on the CELL_PCH connection or URA_PCH connection between the UE 102 and the UTRAN 100. The RNC 106 responds to the cell update message 402 with a cell update confirm message 404. It will be seen that this message exchange between the RNC 106 and UE 102 effectively comprises the first part of the known message exchange described with respect to figure 4 and consequently like numerals have been employed in figure 6 to those employed in figure 4. It will, however, be noted that in the arrangement in accordance with the present invention, it is not necessary to perform the radio bearer setup procedure 306, 308 since the UE 102 already has the necessary TM RB information previously established for the dedicated channel connection. Therefore, the number and size of messages exchanged by the UE 102 and RNC 104 to re-establish the high activity connection is smaller than in the case described with respect to figure 4. By using fewer messages and smaller messages, less connection re-establishment data is transferred over the air interface 103 which reduces the likelihood of interference with other UEs, reduces the likelihood of signalling errors or signalling collisions and speeds up the transition of the UE 102 to a dedicated channel connection.

When re-establishing the dedicated channel state for the UE 102 by causing it to transition from either of the CELL_PCH or URA_PCH states to the CELL_DCH state, it is necessary to arrange the UE 102 to only process signalling radio bearers and delay processing of non-signalling RBs including TM RBs until the UE 102 receives the cell update confirm message 404 in response to having sent the cell update message 402. This is because under the current UMTS specification it is possible to transition a UE from either a CELL_PCH state or a URA_PCH state with RBs to the CELL_DCH state but the transition must be via the CELL_FACH state. However, when transitioning to the CELL_FACH state, the UMTS specification requires that all RBs must have a valid mapping to the UMTS RACH and FACH transport channels but this is not possible under the current specification for TM RBs. Consequently, in the arrangement in accordance with the invention, the UE 102 after sending the cell update message 402 and when transitioning to the CELL_FACH state is arranged to only check signalling RBs and to delay checking non-signalling RBs until the UE 102 receives the cell update confirm message 404 from the RNC 106. The UE 102 can then perform the necessary checks on non-signalling RBs since the RNC 106 has now had an opportunity to remedy the lack of valid mappings, e.g. by moving the UE 102 to the high activity state, i.e. the CELL_DCH state.

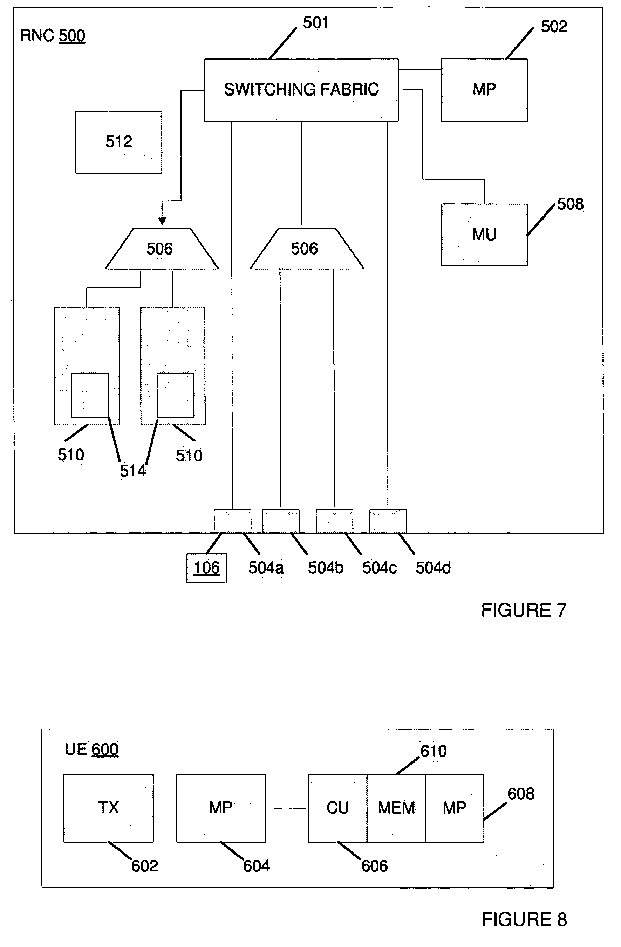

Figure 7 is a schematic block diagram illustrating the functional structure of a RNC 500 suitable as part of a UTRAN 100 for implementing the present invention.

The RNC 500 comprises a switching fabric 501 and at least one control processor 502 connected thereto. The RNC 500 includes a plurality of network interfaces 504 which form the physical layer connections between the RNC 500 and external systems. Such interfaces may include a UTRAN lu interface 504a for interfacing with an operator (core) network 106, one or more UTRAN rlub interfaces 504b for interfacing with other RNCs of the UTRAN 100 and one or more lub interfaces 504c for interfacing with Node Bs or base stations and one or more lux interfaces 504d for interfacing with other external nodes. Multiplexer units 506 connect the interfaces 504 to the switch fabric 501 and convey data flows to the input ports of the switch fabric 501. A management unit 508 for the RNC 500 contains the RNC configuration information for UTRAN radio resources controlled by the RNC 500. A plurality of signalling units 510 (only two are shown) implement the control and user plane protocols required by the RNC 500 and, as such, the present invention is implemented in such units through execution of suitable computer program code stored in a memory 512 of the RNC 500 by processors 514 of the signalling units 510.

Figure 8 is a schematic block diagram of the functional structure of a UE 600 suitable for implementing the present invention within the UTRAN 100.

The UE 600 comprises a transceiver 602 which attends to radio frequency processing of information transmitted and received by the UE 600. The UE 600 also has a processing unit 604 for attending to physical layer protocol processing and some layer 2 protocols such as the MAC and RLC. A control unit 606 having a processor 608 and a memory 610 attends to layer 3 protocol processing such as the RRC protocol. As such, the present invention is implemented within the control unit 606 through the execution of suitable computer program code in the processor 608.

In summary, the present invention concerns a method for maintaining transparent mode radio bearers in a Radio Access Network (RAN) of a third generation mobile telecommunications network. The method relates to managing the radio resources allocated to a user equipment (UE) in said radio access network (RAN). The method generally comprises communicating a message from a radio resource controller (RRC) of the RAN to the UE where said message is arranged to instruct the UE to transition from a dedicated channel connection state to a lower activity connection state and to store in its memory transparent mode (TM) radio bearer (RB) information associated with said dedicated channel connection state. By storing TM RB information associated with the dedicated channel connection state, the UE can be reconfigured to the dedicated channel connection state without the RAN having to perform a radio bearer setup procedure.

## Claims

1. A method of managing a connection state of a user equipment'UE' (102; 600) in a radio access network 'RAN' (100) comprising a Universal Mobile Communications System Terrestrial Radio Access Network 'UTRAN', wherein it comprises the step of:
communicating a message (500) from a radio resource controller 'RRC' (110) of the RAN to the UE, said message being arranged to cause the UE to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode 'TM' radio bearer 'RB' information associated with said first connection state for a period of time after the UE has transitioned to the second connection state;
wherein said message (500) is initiated in response to detection of a period of inactivity on the dedicated channel assigned to the first connection state.

2. A method as claimed in claim 1, wherein detecting a period of inactivity on the dedicated channel assigned to the first connection state comprises detecting a silent period in a data streaming connection.

3. A method as claimed in claim 1 or claim 2, wherein the message (500) communicated to the UE (102; 600) causes the UE to not discard TM RB information associated with said first connection state by instructing the UE to discard physical channel information from radio access bearer 'RAB' information currently being stored by the UE thereby leaving current TM RB information associated with said first connection state.

4. A method as claimed in claim 1 or claim 2, wherein the message (500) communicated to the UE (102; 600) instructs the UE to not discard TM RB associated with said first connection state by causing the UE to retain that part of radio access bearer 'RAB' information currently being stored by the UE comprising TM RB information associated with said first connection state.

5. A method as claimed in any one of claims 1 to 4, wherein the message (500) comprises a physical channel reconfiguration message.

6. A method as claimed in claim 1 or claim 2, wherein the message (500) communicated to the UE (102; 600) instructs the UE to store new TM RB information for the first connection state, said new TM RB information being provided by the RAN RRC (110) in replacement of existing TM RB information associated with said first connection state currently being stored by the UE.

7. A method as claimed in claim 6, wherein the message (500) comprises a radio bearer reconfiguration message.

8. A method as claimed in claim 6, wherein the message (500) comprises a transport channel reconfiguration message.

9. A method as claimed in any one of claims 1 to 8, wherein the second connection state comprises one of a number of second connection states.

10. A method as claimed in any one of claims 1 to 9, wherein in order to retransition the UE (102; 600) from the second connection state to the first connection state, the method includes the step of the UE sending a cell update message (402) to the RAN RRC (110) whereby the UE uses the not discarded TM RB information in co-operation with the RAN RRC to re-establish the first connection state.

11. A method as claimed in any one of claims 1 to 10, wherein the second connection state comprises a CELL_PCH or a URA_PCH state.

12. A method as claimed in any one of claims 1 to 11, wherein the RAN RRC (110) is arranged to initiate a radio bearer release procedure a period of time after it has communicated the message (500) to instruct the UE (102; 600) to transition from a first connection state to a second connection state.

13. A method as claimed in any one of claims 1 to 12, wherein it comprises:
receiving at said UE (102,; 600) said message (500) from the RRC (110); and
processing said message (500) at said UE (102; 600) to cause said UE to transition from said first connection state to said second channel connection state and to not discard transparent mode 'TM' radio bearer 'RB' information associated with said first connection state for a period of time after the UE has transitioned to the second connection state.

14. A radio network contro!!er 'RNC' (106; 500) having a radio resources controller 'RRC' (110) for managing a connection state of a user equipment 'UE' (102; 600) operating within a radio access network 'RAN' (100) comprising a Universal Mobile Communications System Terrestrial Radio Access Network 'UTRAN', said UE communicating with the RNC over an air interface (103), wherein the RRC is arranged to communicate a message (500) to the UE, said message being arranged to cause the UE to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode 'TM' radio bearer 'RB' information associated with said first connection state for a period of time after the UE has transitioned to the second connection state, wherein said message (500) is initiated in response to detection of a period of inactivity on the dedicated channel assigned to the first connection state.

15. A RNC as claimed in claim 14, wherein detecting a period of inactivity on the dedicated channel assigned to the first connection state comprises detecting a silent period in a data streaming connection.

16. A RNC as claimed in claim 14 or claim 15, wherein the RNC is arranged to communicate the message (500) to the UE (102; 600) in a form that causes the UE to not discard TM RB information associated with said first connection state by instructing the UE to discard physical channel information from radio access bearer'RAB' information currently being stored by the UE thereby leaving current TM RB information associated with said first connection state.

17. A RNC as claimed in claim 14 or claim 15, wherein the RNC is arranged to communicate the message (500) to the UE (102; 600) in a form that instructs the UE to not discard TM RB associated with said first connection state by causing the UE to retain that part of radio access bearer'RAB' information currently being stored by the UE comprising TM RB information associated with said first connection state.

18. A RNC as claimed in any one of claims 14 to 17, wherein the RNC is arranged to communicate the message (500) to the UE (102; 600) as a physical channel reconfiguration message.

19. A RNC as claimed in claim 14 or claim 15, wherein the RNC is arranged to communicate the message (500) to the UE (102; 600) in a form that instructs the UE to store new TM RB information for the first connection state, said new TM RB information being provided by the RRC (110) in replacement of existing TM RB information associated with said first connection state currently being stored by the UE.

20. A RNC as claimed in claims 19, wherein the RNC is arranged to communicate the message (500) to the UE (102; 600) as a radio bearer reconfiguration message.

21. A RNC as claimed in claim 19, wherein the RNC is arranged to communicate the message (500) to the UE (102; 600) as a transport channel reconfiguration message.

22. A RNC as claimed in any one of claims 14 to 21, wherein the second connection state comprises one of a number of second connection states.

23. A RNC as claimed in any one of claims 14 to 22, wherein the UE is arranged to send a cell update message (402) to the RRC (110) in order to retransition the UE (102; 600) from the second connection state to the first connection state, whereby the UE uses the stored TM RB information in co-operation with the RRC to re-establish the first connection state.

24. A RNC as claimed in any one of claims 14 to 23, wherein the second connection state comprises a CELL_PCH or a URA_PCH state.

25. A RNC as claimed in any one of claims 14 to 24, wherein the RRC (110) is arranged to initiate a radio bearer release procedure a period of time after it has communicated the message (500) to instruct the UE (102; 600) to transition from the first connection state to the second connection state.

26. A Universal Mobile Communications System Terrestrial radio access network 'UTRAN' (100) comprising a radio network controller 'RNC' (106; 500) as claimed in any one of claims 14 to 25.

27. A user equipment 'UE' (102; 600) operable within a radio access network 'RAN' (100) comprising a Universal Mobile Communications System Terrestrial Radio Access Network 'UTRAN', wherein said UE is arranged to process a transition message (500) received from a radio resources contro!!er 'RRC' (110) of said RAN, wherein, on processing said message, said UE is caused to transition from a first connection state comprising a CELL_DCH state having a dedicated channel assigned to it to a second connection state not having a dedicated channel assigned to it whilst releasing a physical channel assigned to carry TM RBs for said first connection state and to not discard transparent mode 'TM' radio bearer'RB' information associated with said first connection state for a period of time after the UE has transitioned to the second connection state, wherein said message (500) is initiated in response to detection of a period of inactivity on the dedicated channel assigned to the first connection state.

28. A UE as claimed in claim 27, wherein detecting a period of inactivity on the dedicated channel assigned to the first connection state comprises detecting a silent period in a data streaming connection

29. A UE as claimed in claim 27 or claim 28, wherein said UE is arranged to delay processing of non-signalling RBs on transitioning back to said first connection state from said second connection state.

30. A UE as claimed in any one of claims 27 to 29, wherein said UE is arranged to process only signalling RBs on transitioning back to said first connection state from said second connection state and to delay processing of non-signalling RBs until receipt of a message from the RNC.

31. A machine readable medium (512) carrying computer program code for a radio network controller 'RNC' (106; 500) of a radio access network 'RAN' (100) comprising a Universal Mobile Communications System Terrestrial Radio Access Network 'UTRAN', said computer program code being executable in a processor (514) of the RNC for implementing a method as claimed in any one of claims 1 to 13.

## Patentansprüche

1. Verfahren zum Verwalten eines Verbindungszustands einer Benutzeranlage'UE' (102; 600) in einem Funkzugriffsnetz 'RAN' (100), das ein 'UTRAN'-Netz (Universal Mobile Communications System Terrestrial Radio Access Network) umfasst, wobei dieses folgenden Schritt umfasst:
Übertragen einer Nachricht (500) von einem Funkressourcenkontroller 'RRC' (110) des RAN zu der UE, wobei die Nachricht dafür ausgelegt ist, die UE zu veranlassen, aus einem ersten Verbindungszustand, der einen CELL_DCH Zustand umfasst, dem ein dedizierter Kanal zugeordnet ist, in einen zweiten Verbindungszustand überzugehen, dem kein dedizierter Kanal zugeordnet ist, während ein physikalischer Kanal freigegeben wird, der dafür bestimmt ist, TM-RBs für den ersten Verbindungszustand zu befördern und für einen Zeitraum, nachdem die UE in den zweiten Verbindungszustand übergegangen ist, Transparentmodus- ('TM') Funkträger- ('RB') Informationen nicht zu löschen, die zu dem ersten Verbindungszustand gehören;
wobei die Nachricht (500) als Reaktion auf das Erfassen eines Inaktivitätsintervalls auf dem dedizierten Kanal, der dem ersten Verbindungszustand zugeordnet ist, initiiert wird.

2. Verfahren nach Anspruch 1, wobei das Erfassen eines Inaktivitätsintervalls auf dem dedizierten Kanal, der dem ersten Verbindungszustand zugeordnet ist, das Erfassen eines Ruheintervalls in einer Datenstromverbindung umfasst.

3. Verfahren nach Anspruch 1 oder Anspruch 2, wobei die Nachricht (500), die der UE (102; 600) mitgeteilt wird, verursacht, dass die UE die TM-RB-Informationen, die zu dem ersten Verbindungszustand gehören, nicht löscht, indem sie die UE anweist, Informationen über den physikalischen Kanal aus Funkzugangskanal-Informationen ('RAB'-Informationen) zu löschen, die gegenwärtig von der UE gespeichert werden, wodurch aktuelle TM-RB-Informationen dem ersten Verbindungszustand zugeordnet bleiben.

4. Verfahren nach Anspruch 1 oder Anspruch 2, wobei die Nachricht (500), die der UE (102; 600) mitgeteilt wird, die UE anweist, TM-RB, die zu dem ersten Verbindungszustand gehören, nicht zu löschen, indem sie verursacht, dass die UE den Teil der Funkzugangskanal-Informationen ('RAB'-Informationen), die gegenwärtig von der UE gespeichert werden, behält, die TM-RB-Informationen umfassen, die zu dem ersten Verbindungszustand gehören.

5. Verfahren nach einem der Ansprüche 1 bis 4, wobei die Nachricht (500) eine Nachricht für die Neukonfiguration des physikalischen Kanals umfasst.

6. Verfahren nach Anspruch 1 oder Anspruch 2, wobei die Nachricht (500). die der UE (102; 600) mitgeteilt wird, die UE anweist, neue TM-RB-Informationen für den ersten Verbindungszustand zu speichern, wobei die neuen TM-RB-Informationen von dem RAN-RRC (110) im Austausch gegen bestehende TM-RB-Informationen bereitgestellt werden, die zu dem ersten Verbindungszustand gehören, der gegenwärtig von der UE gespeichert wird.

7. Verfahren nach Anspruch 6, wobei die Nachricht (500) eine Funkträgerneukonfigurationsnachricht umfasst.

8. Verfahren nach Anspruch 6, wobei die Nachricht (500) eine Transportkanalneukonfigurationsnachricht umfasst.

9. Verfahren nach einem der Ansprüche 1 bis 8, wobei der zweite Verbindungszustand einen einer Anzahl von zweiten Verbindungszuständen umfasst.

10. Verfahren nach einem der Ansprüche 1 bis 9, wobei das Verfahren, damit die UE (102; 600) erneut von dem zweiten Verbindungszustand in den ersten Verbindungszustand übergeht, den Schritt umfasst, dass die UE eine Funkzellenaktualisierungsnachricht (402) zum RAN-RRC (110) sendet, wobei die UE die nicht gelöschten TM-RB-Informationen zusammen mit dem RAN-RRC verwendet, um den ersten Verbindungszustand wiederherzustellen.

11. Verfahren nach einem der Ansprüche 1 bis 10, wobei der zweite Verbindungszustand einen CELL_PCH oder einen URA_PCH Zustand umfasst.

12. Verfahren nach einem der Ansprüche 1 bis 11, wobei der RAN-RRC (110) dafür ausgelegt ist, eine Zeitspanne, nachdem er die Nachricht (500) mitgeteilt hat, um die UE (102; 600) anzuweisen, aus einem ersten Verbindungszustand in einen zweiten Verbindungszustand überzugehen, ein Funkträgerfreigabeverfahren zu initiieren.

13. Verfahren nach einem der Ansprüche 1 bis 12, wobei es Folgendes umfasst:
Empfangen der Nachricht (500) von dem RRC (110) in der UE (102; 600); und
Verarbeiten der Nachricht (500) in der UE (102; 600), um zu verursachen, dass die UE von dem ersten Verbindungszustand in den zweiten Kanalverbindungszustand übergeht und Transparentmodus- ('TM') Funkträger- ('RB') Informationen, die zu dem ersten Verbindungszustand gehören, für einen Zeitraum, nachdem die UE in den zweiten Verbindungszustand übergegangen ist, nicht löscht.

14. Funknetzkontroller'RNC' (106; 500) mit einem Funkressourcenkontroller'RRC' (110) zum Verwalten eines Verbindungszustands einer Benutzeranlage'UE' (102; 600), die in einem Funkzugriffsnetz 'RAN' (100) arbeitet, das ein 'UTRAN'-Netz (Universal Mobile Communications System Terrestrial Radio Access Network) umfasst, wobei die UE über eine Luftschnittstelle (103) mit dem RNC kommuniziert, wobei der RRC dafür ausgelegt ist, der UE eine Nachricht (500) mitzuteilen, wobei die Nachricht dafür ausgelegt ist, die UE zu veranlassen, aus einem ersten Verbindungszustand, der einen CELL_DCH Zustand umfasst, dem ein dedizierter Kanal zugeordnet ist, in einen zweiten Verbindungszustand überzugehen, dem kein dedizierter Kanal zugeordnet ist, während ein physikalischer Kanal freigegeben wird, der dafür bestimmt ist, TM-RBs für den ersten Verbindungszustand zu befördern und für einen Zeitraum, nachdem die UE in den zweiten Verbindungszustand übergegangen ist, Transparentmodus- ('TM') Funkträger- ('RB') Informationen nicht zu löschen, die zu dem ersten Verbindungszustand gehören, wobei die Nachricht (500) als Reaktion auf das Erfassen eines Inaktivitätsintervalls auf dem dedizierten Kanal, der dem ersten Verbindungszustand zugeordnet ist, initiiert wird.

15. RNC nach Anspruch 14, wobei das Erfassen eines Inaktivitätsintervalls auf dem dedizierten Kanal, der dem ersten Verbindungszustand zugeordnet ist, das Erfassen eines Ruheintervalls in einer Datenstromverbindung umfasst.

16. RNC nach Anspruch 14 oder Anspruch 15, wobei der RNC dafür ausgelegt ist, der UE (102; 600) die Nachricht (500) in einer Form mitzuteilen, die die UE veranlasst, TM-RB-Informationen nicht zu löschen, die zu dem ersten Verbindungszustand gehören, indem sie die UE anweist, Informationen über den physikalischen Kanal aus Funkzugangskanal-Informationen ('RAB'-Informationen) zu löschen, die gegenwärtig von der UE gespeichert werden, wodurch aktuelle TM-RB-Informationen dem ersten Verbindungszustand zugeordnet bleiben.

17. RNC nach Anspruch 14 oder Anspruch 15, wobei der RNC dafür ausgelegt ist, der UE (102; 600) die Nachricht (500) in einer Form mitzuteilen, die die UE anweist, TM-RB nicht zu löschen, die zu dem ersten Verbindungszustand gehören, indem er veranlasst, dass die UE den Teil der Funkzugangskanal-Informationen ('RAB'-Informationen), die gegenwärtig von der UE gespeichert werden, behält, die TM-RB Informationen umfassen, die zu dem ersten Verbindungszustand gehören.

18. RNC nach einem der Ansprüche 14 bis 17, wobei der RNC dafür ausgelegt ist, der UE (102; 600) die Nachricht (500) als Neukonfigurationsnachricht des physikalischen Kanals mitzuteilen.

19. RNC nach Anspruch 14 oder Anspruch 15, wobei der RNC dafür ausgelegt ist, der UE (102; 600) die Nachricht (500) in einer Form mitzuteilen, die die UE anweist, neue TM-RB-Informationen für den ersten Verbindungszustand zu speichern, wobei die neuen TM-RB-Informationen, die von dem RRC (110) bereitgestellt werden, im Austausch gegen bestehende TM-RB-Informationen bereitgestellt werden, die zu dem ersten Verbindungszustand gehören, der gegenwärtig von der UE gespeichert wird.

20. RNC nach Anspruch 19, wobei der RNC dafür ausgelegt ist, der UE (102; 600) die Nachricht (500) als Funkträgerneukonfigurationsnachricht mitzuteilen.

21. RNC nach Anspruch 19, wobei der RNC dafür ausgelegt ist, der UE (102; 600) die Nachricht (500) als Transportkanalneukonfigurationsnachricht mitzuteilen.

22. RNC nach einem der Ansprüche 14 bis 21, wobei der zweite Verbindungszustand einen einer Anzahl von zweiten Verbindungszuständen umfasst.

23. RNC nach einem der Ansprüche 14 bis 22, wobei die UE dafür ausgelegt ist, eine Funkzellenaktualisierungsnachricht (402) zum RRC (110) zu senden, damit die UE (102; 600) erneut von dem zweiten Verbindungszustand in den ersten Verbindungszustand übergeht, wodurch die UE die gespeicherten TM-RB-Informationen zusammen mit dem RRC verwendet, um den ersten Verbindungszustand wiederherzustellen.

24. RNC nach einem der Ansprüche 14 bis 23, wobei der zweite Verbindungszustand einen CELL_PCH oder einen URA_PCH Zustand umfasst.

25. RNC nach einem der Ansprüche 14 bis 24, wobei der RRC (110) dafür ausgelegt ist, eine Zeitspanne, nachdem er die Nachricht (500) mitgeteilt hat, um die UE (102; 600) anzuweisen, aus dem ersten Verbindungszustand in den zweiten Verbindungszustand überzugehen, ein Funkträgerfreigabeverfahren zu initiieren.

26. 'UTRAN'-Netz (Universal Mobile Communications System Terrestrial Radio Access Network) (100), das einen Funknetzkontroller'RNC' (106; 500) nach einem der Ansprüche 14 bis 25 umfasst.

27. Benutzeranlage 'UE' (102; 600), die in einem Funkzugriffsnetz 'RAN' (100) betrieben werden kann, das ein 'UTRAN'-Netz (Universal Mobile Communications System Terrestrial Radio Access Network) umfasst, wobei die UE dafür ausgelegt ist, eine Übergangsnachricht (500) zu verarbeiten, die sie von einem Funkressourcenkontroller 'RRC' (110) des RAN empfangen hat, wobei die UE bei der Verarbeitung der Nachricht dazu veranlasst wird, aus einem ersten Verbindungszustand, der einen CELL_DCH Zustand umfasst, dem ein dedizierter Kanal zugeordnet ist, in einen zweiten Verbindungszustand überzugehen, dem kein dedizierter Kanal zugeordnet ist, während ein physikalischer Kanal freigegeben wird, der dafür bestimmt ist, TM-RBs für den ersten Verbindungszustand zu befördern und für einen Zeitraum, nachdem die UE in den zweiten Verbindungszustand übergegangen ist, Transparentmodus- ('TM') Funkträger-('RB') Informationen nicht zu löschen, die zu dem ersten Verbindungszustand gehören, wobei die Nachricht (500) als Reaktion auf das Erfassen eines Inaktivitätsintervalls auf dem dedizierten Kanal, der dem ersten Verbindungszustand zugeordnet ist, initiiert wird.

28. UE nach Anspruch 27, wobei das Erfassen eines Inaktivitätsintervalls auf dem dedizierten Kanal, der dem ersten Verbindungszustand zugeordnet ist, das Erfassen eines Ruheintervalls in einer Datenstromverbindung umfasst.

29. UE nach Anspruch 27 oder Anspruch 28, wobei die UE dafür ausgelegt ist, beim Übergang aus dem zweiten Verbindungszustand zurück in den ersten Verbindungszustand die Verarbeitung von nicht signalisierenden RBs zu verzögern.

30. UE nach einem der Ansprüche 27 bis 29, wobei die UE dafür ausgelegt ist, beim Übergang aus dem zweiten Verbindungszustand zurück in den ersten Verbindungszustand nur signalisierende RBs zu verabeiten und die Verarbeitung von nicht signalisierenden RBs bis zum Empfang einer Nachricht von dem RNC zu verzögern.

31. Maschinenlesbares Medium (512), das einen Computerprogrammcode für einen Funknetzkontroller 'RNC' (106; 500) eines Funkzugriffsnetzes 'RAN' (100) trägt, das ein 'UTRAN'-Netz (Universal Mobile Communications System Terrestrial Radio Access Network) umfasst, wobei der Computerprogrammcode in einem Prozessor (514) der RNC ausführbar ist, um ein Verfahren nach einem der Ansprüche 1 bis 13 zu implementieren.

## Revendications

1. Un procédé pour gérer un état de connexion d'un équipement d'utilisateur « UE » (102 ; 600) dans un réseau d'accès radio « RAN » (100) comportant un réseau d'accès radio terrestre « UTRAN » par Système universel de communications mobiles, où il comporte l'étape visant à :
communiquer un message (500) d'un contrôleur de ressources radio « RRC » (110) du RAN de l'UE, ledit message étant agencé pour amener l'UE à passer d'un premier état de connexion comportant un état CELL_DCH auquel est attribué un canal dédié à un deuxième état de connexion auquel n'est pas attribué un canal dédié tout en libérant un canal physique attribué pour transporter des supports radio à mode transparent (« TM RB ») pour ledit premier état de connexion et pour ne pas rejeter les informations de support radio « RB » (« *radio bearer* ») à mode transparent « TM » (« *transparent mode »)* associées audit premier état de connexion pendant une période de temps après le passage de l'UE au deuxième état de connexion ;
où ledit message (500) est lancé en réponse à la détection d'une période d'inactivité sur le canal dédié attribué au premier état de connexion.

2. Un procédé tel que revendiqué dans la revendication 1, où la détection d'une période d'inactivité sur le canal dédié attribué au premier état de connexion comporte la détection d'une période silencieuse dans une connexion de transmission en continu (« *streaming* ») de données.

3. Un procédé tel que revendiqué dans la revendication 1 ou la revendication 2, où le message (500) communiqué à l'UE (102 ; 600) amène l'UE à ne pas rejeter les informations de TM RB associées audit premier état de connexion en donnant instruction à l'UE de rejeter les informations de canal physique provenant des informations de support d'accès radio « RAB » actuellement stockées par l'UE laissant de ce fait les informations de TM RB actuelles associées audit premier état de connexion.

4. Un procédé tel que revendiqué dans la revendication 1 ou la revendication 2, où le message (500) communiqué à l'UE (102 ; 600) donne instruction à l'UE de ne pas rejeter le TM RB associé audit premier état de connexion en amenant l'UE à conserver la partie des informations de support d'accès radio « RAB » actuellement stockées par l'UE comportant les informations de TM RB associées audit premier état de connexion.

5. Un procédé tel que revendiqué dans n'importe laquelle des revendications 1 à 4, où le message (500) comporte un message de reconfiguration de canal physique.

6. Un procédé tel que revendiqué dans la revendication 1 ou la revendication 2, où le message (500) communiqué à l'UE (102 ; 600) donne instruction à l'UE de stocker de nouvelles informations de TM RB pour le premier état de connexion, lesdites nouvelles informations de TM RB étant fournies par le RRC (110) de RAN en remplacement des informations de TM RB existantes associées audit premier état de connexion actuellement stockées par l'UE.

7. Un procédé tel que revendiqué dans la revendication 6, où le message (500) comporte un message de reconfiguration de support radio.

8. Un procédé tel que revendiqué dans la revendication 6, où le message (500) comporte un message de reconfiguration de canal de transport.

9. Un procédé tel que revendiqué dans n'importe laquelle des revendications 1 à 8, où le deuxième état de connexion comporte un deuxième état de connexion parmi plusieurs deuxièmes états de connexion.

10. Un procédé tel que revendiqué dans n'importe laquelle des revendications 1 à 9, où afin de faire repasser l'UE (102 ; 600) du deuxième état de connexion au premier état de connexion, le procédé comprend l'étape pour l'UE d'envoi d'un message de mise à jour de cellule (402) au RRC (110) de RAN grâce à quoi l'UE utilise les informations de TM RB non rejetées en coopération avec le RRC de RAN pour rétablir le premier état de connexion.

11. Un procédé tel que revendiqué dans n'importe laquelle des revendications 1 à 10,
où le deuxième état de connexion comporte un état CELL_PCH ou un état URA_PCH.

12. Un procédé tel que revendiqué dans n'importe laquelle des revendications 1 à 11, où le RRC (110) de RAN est agencé pour lancer une procédure de libération de support radio une période de temps après avoir communiqué le message (500) pour donner instruction à l'UE (102 ; 600) de passer d'un premier état de connexion à un deuxième état de connexion.

13. Un procédé tel que revendiqué dans n'importe laquelle des revendications 1 à 12, où il comporte les étapes visant à :
recevoir au niveau dudit UE (102 ; 600) ledit message (500) du RRC (110) ; et
traiter ledit message (500) au niveau dudit UE (102 ; 600) pour amener ledit UE à passer dudit premier état de connexion audit deuxième état de connexion de canal et à ne pas rejeter les informations de support radio « RB » à mode transparent « TM » associées audit premier état de connexion pendant une période de temps après le passage de l'UE au deuxième état de connexion.

14. Un contrôleur de réseau radio « RNC » (106 ; 500) ayant un contrôleur de ressources radio « RRC » (110) pour gérer un état de connexion d'un équipement d'utilisateur « UE » (102 ; 600) fonctionnant à l'intérieur d'un réseau d'accès radio « RAN » (100) comportant un réseau d'accès radio terrestre « UTRAN » par Système universel de communications mobiles, ledit UE communiquant avec le RNC sur une interface hertzienne (103), où le RRC est agencé pour communiquer un message (500) à l'UE, ledit message étant agencé pour amener l'UE à passer d'un premier état de connexion comportant un état CELL_DCH auquel est attribué un canal dédié à un deuxième état de connexion auquel n'est pas attribué un canal dédié tout en libérant un canal physique attribué pour transporter des TM RB pour ledit premier état de connexion et pour ne pas rejeter les informations de support radio « RB » à mode transparent « TM » associées audit premier état de connexion pendant une période de temps après le passage de l'UE au deuxième état de connexion, où ledit message (500) est lancé en réponse à la détection d'une période d'inactivité sur le canal dédié attribué au premier état de connexion.

15. Un RNC tel que revendiqué dans la revendication 14, où la détection d'une période d'inactivité sur le canal dédié attribué au premier état de connexion comporte la détection d'une période silencieuse dans une connexion de transmission en continu de données.

16. Un RNC tel que revendiqué dans la revendication 14 ou la revendication 15, où le RNC est agencé pour communiquer le message (500) à l'UE (102 ; 600) sous une forme qui amène l'UE à ne pas rejeter les informations de TM RB associées audit premier état de connexion en donnant instruction à l'UE de rejeter les informations de canal physique provenant des informations de support d'accès radio « RAB » actuellement stockées par l'UE laissant de ce fait les informations de TM RB actuelles associées audit premier état de connexion.

17. Un RNC tel que revendiqué dans la revendication 14 ou la revendication 15, où le RNC est agencé pour communiquer le message (500) à l'UE (102 ; 600) sous une forme qui donne instruction à l'UE de ne pas rejeter les informations de TM RB associées audit premier état de connexion en amenant l'UE à conserver la partie des informations de support d'accès radio « RAB » actuellement stockées par l'UE comportant les informations de TM RB associées audit premier état de connexion.

18. Un RNC tel que revendiqué dans n'importe laquelle des revendications 14 à 17, où le RNC est agencé pour communiquer le message (500) à l'UE (102 ; 600) en tant que message de reconfiguration de canal physique.

19. Un RNC tel que revendiqué dans la revendication 14 ou la revendication 15, où le RNC est agencé pour communiquer le message (500) à l'UE (102 ; 600) sous une forme qui donne instruction à l'UE de stocker de nouvelles informations de TM RB pour le premier état de connexion, lesdites nouvelles informations de TM RB étant fournies par le RRC (110) en remplacement des informations de TM RB existantes associées audit premier état de connexion actuellement stockées par l'UE.

20. Un RNC tel que revendiqué dans la revendication 19, où le RNC est agencé pour communiquer le message (500) à l'UE (102 ; 600) en tant que message de reconfiguration de support radio.

21. Un RNC tel que revendiqué dans la revendication 19, où le RNC est agencé pour communiquer le message (500) à l'UE (102 ; 600) en tant que message de reconfiguration de canal de transport.

22. Un RNC tel que revendiqué dans n'importe laquelle des revendications 14 à 21, où le deuxième état de connexion comporte un deuxième état de connexion parmi plusieurs deuxièmes états de connexion.

23. Un RNC tel que revendiqué dans n'importe laquelle des revendications 14 à 22, où l'UE est agencé pour envoyer un message de mise à jour de cellule (402) au RRC (110) afin de faire repasser l'UE (102 ; 600) du deuxième état de connexion au premier état de connexion, grâce à quoi l'UE utilise les informations de TM RB stockées en coopération avec le RRC pour rétablir le premier état de connexion.

24. Un RNC tel que revendiqué dans n'importe laquelle des revendications 14 à 23, où le deuxième état de connexion comporte un état CELL_PCH ou un état URA_PCH.

25. Un RNC tel que revendiqué dans n'importe laquelle des revendications 14 à 24, où le RRC (110) est agencé pour lancer une procédure de libération de support radio une période de temps après avoir communiqué le message (500) pour donner instruction à l'UE (102 ; 600) de passer du premier état de connexion au deuxième état de connexion.

26. Un réseau d'accès radio terrestre « UTRAN » par Système universel de communications mobiles (100) comportant un contrôleur de réseau radio « RNC » (106 ; 500) tel que revendiqué dans n'importe laquelle des revendications 14 à 25.

27. Un équipement d'utilisateur « UE » (102 ; 600) utilisable à l'intérieur d'un réseau d'accès radio « RAN » (100) comportant un réseau d'accès radio terrestre « UTRAN » par Système universel de communications mobiles, où ledit UE est agencé pour traiter un message de passage (500) reçu d'un contrôleur de ressources radio « RRC » (110) dudit RAN, où, au moment de traiter ledit message, ledit UE est amené à passer d'un premier état de connexion comportant un état CELL_DCH auquel est attribué un canal dédié à un deuxième état de connexion auquel n'est pas attribué un canal dédié tout en libérant un canal physique attribué pour transporter des TM RB pour ledit premier état de connexion et pour ne pas rejeter les informations de support radio « RB » à mode transparent « TM » associées audit premier état de connexion pendant une période de temps après le passage de l'UE au deuxième état de connexion, où ledit message (500) est lancé en réponse à la détection d'une période d'inactivité sur le canal dédié attribué au premier état de connexion.

28. Un UE tel que revendiqué dans la revendication 27, où la détection d'une période d'inactivité sur le canal dédié attribué au premier état de connexion comporte la détection d'une période silencieuse dans une connexion de transmission en continu de données.

29. Un UE tel que revendiqué dans la revendication 27 ou la revendication 28, où ledit UE est agencé pour retarder le traitement des RB sans signalisation au moment de repasser audit premier état de connexion depuis ledit deuxième état de connexion.

30. Un UE tel que revendiqué dans n'importe laquelle des revendications 27 à 29, où ledit UE est agencé pour traiter seulement les RB avec signalisation au moment de repasser audit premier état de connexion depuis ledit deuxième état de connexion et pour retarder le traitement des RB sans signalisation jusqu'à réception d'un message du RNC.

31. Un support lisible par machine (512) transportant un code de programme informatique pour un contrôleur de réseau radio « RNC » (106 ; 500) d'un réseau d'accès radio « RAN » (100) comportant un réseau d'accès radio terrestre « UTRAN » par Système universel de communications mobiles, ledit code de programme informatique étant exécutable dans un processeur (514) du RNC pour implémenter un procédé tel que revendiqué dans n'importe laquelle des revendications 1 à 13.
